(19) Europäisches Patentamt
European Patent Office
Office européen des brevets

(11) **EP 3 385 663 B1**

(12) **EUROPEAN PATENT SPECIFICATION**

(45) Date of publication and mention
of the grant of the patent:
**11.05.2022 Bulletin 2022/19**

(21) Application number: **16917013.1**

(22) Date of filing: **04.12.2016**

(51) International Patent Classification (IPC):
*G02B 21/00* *(2006.01)*  *G02B 21/24* *(2006.01)*
*G02B 21/36* *(2006.01)*  *G01B 11/06* *(2006.01)*
*G01B 21/04* *(2006.01)*

(52) Cooperative Patent Classification (CPC):
**G01B 21/042; G01B 11/0608; G02B 21/244**

(86) International application number:
**PCT/CN2016/108471**

(87) International publication number:
**WO 2018/098833 (07.06.2018 Gazette 2018/23)**

(54) **HEIGHT MEASURING AND ESTIMATION METHOD OF UNEVEN SURFACE OF MICROSCOPE SLIDE, AND MICROSCOPE**

HÖHENMESS- UND -SCHÄTZUNGSVERFAHREN DER UNEBENEN OBERFLÄCHE EINES OBJEKTTRÄGERS UND MIKROSKOP

PROCÉDÉ DE MESURE ET D'ESTIMATION DE HAUTEUR DE SURFACE IRRÉGULIÈRE DE LAME DE MICROSCOPE, ET MICROSCOPE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2016 CN 201611077830**

(43) Date of publication of application:
**10.10.2018 Bulletin 2018/41**

(73) Proprietor: **YIN, Yeufeng**
**Suzhou, Jiangsu 215000 (CN)**

(72) Inventor: **YIN, Yeufeng**
**Suzhou, Jiangsu 215000 (CN)**

(74) Representative: **Grünecker Patent- und**
**Rechtsanwälte**
**PartG mbB**
**Leopoldstraße 4**
**80802 München (DE)**

(56) References cited:
**WO-A1-2016/179286        CN-A- 101 033 950**
**CN-A- 101 949 689        CN-A- 102 884 395**
**CN-A- 104 730 702        US-A- 5 966 214**
**US-A1- 2006 279 746**

**Description**

**FIELD OF THE INVENTION**

The present invention relates to a method for measuring and calculating heights of points on a curved surface of a curved object through measuring coordinates and heights of a plurality of points on another curved surface object with a standard size and material which are the same as those of the curved surface object to be measured and calculated, and particularly relates to a method for measuring and calculating heights on a curved surface of a microscope slide, which is applied to microscopic scanning for fast imaging.

**BACKGROUND OF THE INVENTION**

The outer surface of any object can be regarded as a regular or irregular curved surface. Surfaces of precise components manufactured with modern advanced technologies are already very "flat", and it is hence difficult to see changes of "heights" on the curved surfaces of these precise components with human eyes. However, in some scientific fields requiring extreme precision, for example, in a microscopic world magnified by an optical microscope, subtle changes can be magnified many times, thereby greatly affecting observation results and quality of images photographed by the microscope. Especially, a subtle change of heights on the curved surface of a microscope slide may cause a change of a distance between a sample on the microscope slide and the microscope lens. At low magnification, a depth of field (DOF) is large (the DOF is the distance between the nearest and farthest objects in a scene that appear acceptably sharp in an image formed in front of a microscope lens or other imagers; after being focused, clear images can be formed in front and at back of the focus; and the distance between the front and the back is called the DOF), so an effect of the DOF on imaging of the sample is limited, the distance between the sample and the lens still falls within the DOF without adjusting the distance between the adjustable lens and the microscope slide, and it is hence still capable of obtaining clear images. However, at high magnification (for example, above 100 times), since the DOF is small, a subtle height change (in micron dimension) of the curved surface of the microscope slide may cause that the distance between the sample on the microscope slide and the microscope lens exceeds the DOF, the image observed is hence blurry, and the image photographed is also blurry.

As described above, the change of height on the curved surface of the microscope slide may greatly affect the quality of image at high magnification. Since a microscope slide is usually fully covered with several samples (the samples are objects to be observed which are placed on the microscope slide; a plurality of samples may be placed on the same microscope slide; and a region of the microscope slide covered by each of the samples is defined as a surface region), a plurality of observations must be done to the samples for each microscope slide. Since the microscope lens is immobile, the samples are moved to the lens for observation under the driving of a metal rail platform movable in a transverse direction and a longitudinal direction which is used for supporting the microscope slides. In order to obtain clear image, the distance between the lens and the microscope slide must be adjusted for different samples to ensure the distance between the sample and the lens is within the DOF. At low magnification, since the DOF is large, the subtle change of height on the curved surface of the microscope slide will not affect imaging definition substantially. However, at high magnification, for example above 100 times, since the DOF is small, a micrometer-scale change of height on the curved surface of the microscope slide may cause the samples exceeding the DOF. Thus, it needs to adjust the distance between the lens and the microscope slide manually. Therefore, the efficiency at high magnification is very low, which hence brings great obstacles to scientific research and technology development because there are many samples placed on one microscope slide and the distance needs to be readjusted during each observation of the samples.

In a previously applied patent with a publication number of CN104730702, a shooting method of a microscopic scanning platform for realizing continuous scanning is disclosed. An adjustment of the distance between the lens and the standard microscope slide on an object stage is corrected by measuring the height change of the object stage. However, the influence of the height change of the curved surface of the microscope slide on the image shot by the microscope is still not overcome.

In an invention patent with a publication number of CN102298206, a focusing method (referring to paragraph 0019 of the description) is disclosed for calculating a characteristic quantity representing a focus shift degree of an illuminated field diaphragm based on an output signal generated by an image pickup element, and for driving an illuminated field diaphragm focus adjustment mechanism based on the calculated characteristic quantity to adjust an imaging position of the illuminated field diaphragm imaging. In this invention, a thickness change (i.e., the height change of the curved surface) of the microscope slide is calculated according to difference images between two pictures shot at parts of the microscope slide with different thickness and according to an intensity difference between an output signal of a first image and an output signal of a second image. A position control part moves a position of a microscope stage toward an optical illumination system according to the thickness change calculated by a thickness change calculation module. The above solution provides a focusing method for calculating the characteristic quantity representing the focus shift

degree of the illuminated field diaphragm based on the output signal generated by the image pickup element, and for driving the illuminated field diaphragm focus adjustment mechanism based on the calculated characteristic quantity to adjust the imaging position of illuminated field diaphragm imaging. However actually, it is a method with a large error when applied to a high-power microscope with magnification greater than 100 times and is unable to achieve auto-focused fast photographing and scanning.

US 2006/279746 A1 discloses a method and a system for device-independent determination of coordinates of a point, displayed by means of a microscope.

Therefore, a method capable of accurately measuring and calculating the heights on the curved surface of the microscope slide at high magnification is provided in this disclosure, and the method is applied to the technical field of fast scanning of microscopes.

## SUMMARY OF THE INVENTION

In order to solve the above technical problems, the present disclosure provides a method for measuring and calculating heights on a curved surface of a curved surface object. The method is capable of measuring and calculating the heights on the curved surface of the curved surface object, and specifically capable of being applied to measure and calculate the heights on the curved surface of the microscope slide and capable of correcting a distance between a microscope lens and the microscope slide according to the heights. Thus, a method capable of automatically scanning and photographing a plurality of samples on the microscope slide at high magnification is provided and a microscope is further provided.

Specifically, a method for measuring and calculating heights on a curved surface of a curved surface object is defined in independent claim 1. A microscope according to the invention is defined in independent claim 4.

The method for measuring and calculating the heights on the curved surface of the curved surface object provided in the present disclosure is a technical solution proposed for objects with the same material and size, and preferably the objects having rectangular bottom surfaces. The measuring region refers to an area which can be imaged by an imaging tool such as a microscope, a video camera, and a camera optical imaging device. A position of the curved surface object in a plane coordinate is determined by acquiring the coordinate of the standard curved surface object in a measurement system of an optical device, so that each point within the measuring region can be marked, and the measured physical quantity of height is converted into data which can be displayed by a display system and calculated by a computer program. The data representing the physical quantity of height in the optical device system is defined as the height. A quantitative calculation method reflecting a change law of any variable physical phenomenon can be expressed by a mathematical expression. Technical ideas of the present disclosure are to apply the mathematical expression capable of reflecting the change law and to input a measurable quantity so as to calculate a value to be measured which conforms to the law. The coordinates of the standard curved surface object and the heights of the standard measuring points in the surface regions of the standard curved surface object are measurable quantities in the present invention. The standard curved surface object refers to a template object with a certain material and size. The curved surface object to be measured refers to another curved surface object with the same material and size as the standard curved surface object. The same size refers to having at least a same bottom area, a same bottom shape or a same length and width. The surface region is the area imaged by the imaging tool at a time. The standard measuring point is a point of an imaging center point of the imaging tool projected on the surface region. In the present disclosure, the height of the standard measuring point of the curved surface object to be measured is measured and calculated through the mathematical expression according to the measured coordinates of the standard measuring point of the standard curved surface object as a template and a plurality of measured heights on the curved surface.

Further, at least the heights of all the standard measuring points on a boundary line along an X-axis direction and all the standard measuring points on the boundary line along a Y-axis direction in the measuring region of the standard curved surface object, and the height of the standard measuring point farthest from an origin relative to the points within the measuring region of the standard curved surface object are measured.

Further, the coordinates between the standard measuring points on the standard curved surface object and on the curved surface object to be measured are in a one-to-one correspondence relationship. The so-called one-to-one correspondence relationship herein is understood as that shapes of the standard curved surface object and the curved surface object to be measured are exactly the same, and the coordinates of two objects will be completely coincident when placed in a same coordinate system.

Further, based on a three-dimensional coordinate system established by a measurement device during measurement, scale values indicating length measurement units are divided in the X-axis direction and the Y-axis direction of the coordinate system, so that the coordinates of the standard measuring points on the standard curved surface object and the curved surface object to be measured can be expressed by coordinate values; the heights are numerical values which can be calculated by an electronic computer; and the heights correspond to positions of the standard measuring points in a Z-axis direction in the coordinate system of the measurement device. The so-called three-dimensional coordinate system refers to a virtual coordinate system. Generally, the imaging device itself is a device with the three-dimensional coordinate system. Taking the microscope for example, a vertical direction in which the microscope lens moves is the Z-axis direction; and an object stage for placing the microscope slide falls into an X-Y axis plane coordinate system. The established virtual three-dimensional coordinate system in the present invention should be understood as a measurement system capable of measuring the length and width of a curved surface object and its position in the vertical direction. The X-axis direction and the Y-axis direction should be understood as a length direction and a width direction of the measuring region of an object, and the Z-axis direction as a height direction. For an automatic scanning microscope, the lens moves under the driving of a movement mechanism, and a moving distance is controlled by providing a small voltage or current via devices. Thus, computer programs are needed to control hardware devices. The heights are data with no physical significance which can be "read" by the computer program, and usually are data displayed by a display system in a microscope control system, such as a display screen. The program in the microscope maintains the corresponding relationship between the height and the position, so that the movement mechanism can drive the lens to a corresponding specific position according to the height.

Preferably, bottom surfaces of the standard curved surface object and the curved surface object to be measured are rectangular surfaces.

According to the invention, a method for measuring and calculating heights on a curved surface of the microscope slide comprises:

Dividing a measuring region of a known standard microscope slide into a plurality of surface regions, wherein a length of the measuring region along the X-axis direction is $L_x$, a length along the Y-axis direction is $L_y$, a coordinate of a standard measuring point B on any one of the surface regions within the measuring region is $(x, y)$, a height of the point is measured as $Z_a(x, y)$, and the coordinates of points at four corners of the measuring region are $(0, 0)$, $(L_x, 0)$, $(L_x, L_y)$ and $(0, L_y)$ respectively; measuring the coordinates of the standard measuring points in each of the surface regions within the measuring region; and measuring at least all the heights $Z_B(x, 0)$ and $Z_B(0, y)$ on two boundary lines along the X-axis direction and along the Y-axis direction and a height $Z_B(L_x, L_y)$ of a point with a coordinate $(L_x, L_y)$;

Providing another microscope slide to be measured with the same size as the standard microscope slide, wherein the coordinates of the points at the four corners of the measuring region of the microscope slide to be measured are $(0, 0)$, $(L_x, 0)$, $(L_x, L_y)$ and $(0, L_y)$ respectively; the heights of the points at the four corners are $Z_A(0,0)$, $Z_A(L_x,0)$, $Z_A(L_x,L_y)$ and $Z_A(0,L_y)$ respectively; then a point A with a coordinate $(x, y)$ corresponding to a standard measuring point with a coordinate $(x, y)$ in the measuring region of the standard microscope slide necessarily exists in the measuring region of the microscope slide to be measured; and a height of the point A is $Z_A(x, y)$;

Combining the following equations:

an equation for calculating a relative height of the standard measuring point on a boundary of the standard microscope slide:

$$D_B(x, 0) = \frac{(x n_{B1} + (z_\mathbf{B}(x, 0) - z_{B1}) n_{B3})}{\sqrt{n_{B1}^2 + n_{B2}^2 + n_{B3}^2}}$$

$$D_B(0, y) = \frac{(y n_{B2} + (z_\mathbf{B}(0, y) - z_{B1}) n_{B3})}{\sqrt{n_{B1}^2 + n_{B2}^2 + n_{B3}^2}} \tag{1}$$

wherein,

$z_{B1} = Z_B(0, 0)$, $z_{B3} = Z_B(L_x, 0)$, $z_{B4} = Z_B(L_x, L_y)$,
$n_{B1} = L_y(z_{B1} - z_{B3})$, $n_{B2} = L_x(z_{B1} - z_{B5})$, $n_{B3} = L_x L_y$, $z_{B5} = Z_B(0, L_y)$, and
$(n_{B1}, n_{B2}, n_{B3})$ is a normal vector of a plane defined by three standard measuring points with the coordinates $(0, 0)$, $(L_x, 0)$ and $(0, L_y)$ on the standard microscope slide;

an equation for calculating a relative height of any one of the standard measuring points in the measuring region of the microscope slide to be measured:

$$D_A(x, y) = D_B(x, 0) + f_x(x, a, L_x) + D_B(0, y) + f_y(y, b, L_y) + \frac{x y D_A(L_x, L_y)}{L_x L_y} \tag{2}$$

wherein, $f_x(x, a, L_x)$ is a height difference function for the points at the boundary along the X-axis direction of the microscope slide to be measured, and $f_y(y, b, L_y)$ is a height difference function for the points at the boundary along the Y-axis direction of the microscope slide to be measured;

an equation for calculating a relative height of the standard measuring point with the coordinate $(L_x, L_y)$:

$$D_A((L_x, L_y)) = \frac{(L_x n_{A1} + L_y n_{A2} + (z_{A4} - z_{A1}) n_{A3})}{\sqrt{n_{A1}^2 + n_{A2}^2 + n_{A3}^2}} \tag{3}$$

wherein, $z_{A1} = Z_A(0, 0)$, $z_{A4} = Z_A(L_x, L_y)$;

$$n_{A1} = L_y(z_{A1} - z_{A3}), \quad n_{A2} = L_x(z_{A1} - z_{A5}), \quad n_{A3} = L_x L_y \ , \tag{4}$$

wherein, $z_{A3} = Z_A(L_x, 0)$, $z_{A5} = Z_A(0, L_y)$;

and an equation for converting the relative height $D_A(x, y)$ of any one of the points in the measuring region of the microscope slide to be measured into the height $Z_A(x, y)$:

$$D_A(x, y) \sqrt{n_{A1}^2 + n_{A2}^2 + n_{A3}^2} = n_{A1}x + n_{A2}y + n_{A3}(Z_A(x, y) - z_{A1}) \tag{5}$$

Obtaining an equation set about unknown numbers a, b, $z_{A1}$, $z_{A3}$, $z_{A4}$ and $z_{A5}$ according to the previous equations (1), (2), (3), (4) and (5):

$$\begin{cases} D_A(x_i, y_i) = \dfrac{(x n_{B1} + (Z_B(x_i, 0) - z_{B1}) n_{B3})}{\sqrt{n_{B1}^2 + n_{B2}^2 + n_{B3}^2}} + f_x(x_i, a, L_x) + \dfrac{(y n_{B2} + (Z_B(0, y_i) - z_{B1}) n_{B3})}{\sqrt{n_{B1}^2 + n_{B2}^2 + n_{B3}^2}} \\[2ex] \quad + f_y(y_i, b, L_y) + \dfrac{x_i y_i}{L_x L_y} \dfrac{(L_x n_{A1} + L_y n_{A2} + (z_{A4} - z_{A1}) n_{A3})}{\sqrt{n_{A1}^2 + n_{A2}^2 + n_{A3}^2}} \\[2ex] D_A(x_i, y_i) \sqrt{n_{A1}^2 + n_{A2}^2 + n_{A3}^2} = n_{A1}x + n_{A2}y + n_{A3}(z_i - z_{A1}) \\[1ex] n_{B1} = L_y(z_{B1} - z_{B3}), \quad n_{B2} = L_x(z_{B1} - z_{B5}), \quad n_{B3} = L_x L_y \\[1ex] n_{A1} = L_y(z_{A1} - z_{A3}), \quad n_{A2} = L_x(z_{A1} - z_{A5}), \quad n_{A3} = L_x L_y \end{cases} \tag{6};$$

and

Measuring the coordinates and the heights of any at least six standard measuring points in the measuring region of the microscope slide to be measured to obtain an input $(x_i, y_i, z_i)$, substituting the input into the equation set (6) to obtain a functional equation of the coordinates and the heights, and then inputting the coordinate (x, y) of any one of the standard measuring points on the microscope slide to be measured to obtain the corresponding height $Z_A(x, y)$, wherein the microscope slide is a in standard rectangular structure; a region area of the microscope slide is the entire area automatically scanned by the microscope, or the region area of the samples tiled on the microscope slide becomes a measuring region area in practical application; the heights of a plurality of microscope slides to be measured can be measured and calculated according to the coordinates and the heights of one standard microscope slide as the template; and the measurement of the height of any one of the points on the curved surface of the microscope slide and the acquisition of specific position points in the measurement system through calculation have a wide industrial application value in the industrial field of precision instruments.

Further, a is a parameter of the height difference function for the points on the boundary along the X-axis direction of the microscope slide to be measured; and b is a parameter of the height difference function for the points on the boundary along the Y-axis direction of the microscope slide to be measured.

A scanning method is capable of obtaining images of the samples placed on any one of the surface regions of the microscope slide to be measured and capable of scanning automatically to obtain the images of all the samples placed on the microscope slide to be measured by applying the above method for measuring and calculating the heights on the curved surface of the microscope slide. Application of the present disclosure is as follows: the heights of a plurality of microscope slides to be measured can be measured through one standard microscope slide by applying the method provided in the present disclosure. The heights represent the positions of the corresponding standard measuring points in the vertical direction of the microscope. After calculating the height of each microscope slide to be measured, the position of each standard measuring point of a current microscopic scanning imaging device can be inferred actually. In order to obtain a clear scanned image, it requires the distance between the imaging device and the samples on the microscope slide falls within the DOF. When it needs to scan the image of the sample at one standard measuring point, it only needs data conversion so as to obtain a relative position between the imaging device and each standard measuring point on the microscope slide, which conforms to the DOF, and the clear image is then obtained by moving the imaging device to an appropriate position.

A microscope, to which above method for measuring and calculating the heights on the curved surface of the microscope slide or scanning method is applied, comprises a movement mechanism which is capable of moving up and down to adjust a distance between the microscope lens and the microscope slide. The height of each standard measuring point within a scanning scope of the microscope is calculated using the method for measuring and calculating the heights on the curved surface of the microscope slide. The height represents the data converted from the physical quantity of height of each standard measuring point in a microscope observation system, and the data can be calculated in a microscope calculation system. Therefore, the height of each standard measuring point actually represents the physical quantity of the corresponding height in the microscope observation system. At a fixed magnification, the relative distance between the microscope and the sample on the microscope slide is fixed for clear imaging. Therefore, the height of the microscope lens for clear imaging can be obtained as long as the height of each standard measuring point in the microscope observation system is known. The microscope will drive the movement mechanism to automatically adjust the distance between the lens and the microscope slide according to the height so that clear imaging is realized and the formed image is scanned or photographed to form image data for storage.

The following method is used for automatically scanning and imaging samples on the microscope slide and storing as data, specifically comprising the following steps:

step 1, providing a standard microscope slide; dividing a measuring region of the microscope slide into a plurality of surface regions, wherein a length of the measuring region along the X-axis direction is $L_x$, a length along the Y-axis direction is $L_y$, a coordinate of a standard measuring point B on any one of the surface regions within the measuring region is $(x, y)$, a height of the point B is measured as $Z_B(x, y)$, and coordinates of points at four corners of the measuring region in a clockwise direction are $(0, 0)$, $(L_x, 0)$, $(L_x, L_y)$ and $(0, L_y)$ respectively; measuring the coordinates of the standard measuring points in each of the surface regions in the measuring region; and measuring at least all the heights $Z_B(x, 0)$ and $Z_B(0, y)$ on two boundary lines respectively along the X-axis direction and the Y-axis direction and a height $Z_B(L_x, L_y)$ with a coordinate $(L_x, L_y)$;

step 2, providing another microscope slide to be measured with the same size as the standard microscope slide, wherein coordinates of points at the four corners in the measuring region of the microscope slide to be measured are $(0, 0)$, $(L_x, 0)$, $(L_x, L_y)$ and $(0, L_y)$ respectively; heights of the points at the four corners are respectively $Z_A(0, 0)$, $Z_A(L_x, 0)$, $Z_A(L_x, L_y)$, and $Z_A(0, L_y)$; then a point A with a coordinate $(x, y)$ corresponding to a standard measuring point with a coordinate $(x, y)$ in the measuring region of the standard microscope slide necessarily exists in the measuring region of the microscope slide to be measured; and the point A has a height of $Z_A(x, y)$;

step 3, substituting the obtained coordinates and heights into the following equations to obtain a functional equation of the coordinates and the heights on the microscope slide to be measured:

an equation for calculating a relative height of the standard measuring point on a boundary of the standard microscope slide:

$$D_B(x, 0) = \frac{(xn_{B1} + (Z_B(x, 0) - z_{B1})n_{B3})}{\sqrt{n_{B1}^2 + n_{B2}^2 + n_{B3}^2}}$$

$$D_B(0, y) = \frac{(yn_{B2} + (Z_B(0, y) - z_{B1})n_{B3})}{\sqrt{n_{B1}^2 + n_{B2}^2 + n_{B3}^2}}$$

(1)

wherein,

$z_{B1} = Z_B(0, 0)$, $z_{B3} = Z_B(L_x, 0)$, $z_{B4} = Z_B(L_x, L_y)$,

$n_{B1} = L_y(z_{B1} - z_{B3})$, $n_{B2} = L_x (z_{B1} - z_{B5})$, $n_{B3} = L_x L_y$, $z_{B5} = Z_B(0, L_y)$, and

$(n_{B1}, n_{B2}, n_{B3})$ is a normal vector of a plane defined by three standard measuring points with the coordinates $(0, 0)$, $(L_x, 0)$ and $(0, L_y)$ on the standard microscope slide;

an equation for calculating a relative height of any one of the standard measuring points in the measuring region of the microscope slide to be measured:

$$D_A(x, y) = D_B(x,0) + f_x(x,a, L_x) + D_B(0,y) + f_y(y, b, L_y) + \frac{xy D_A(L_x, L_y)}{L_x L_y} \quad (2)$$

wherein, $f_x(x, a, L_x)$ is a height difference function for the points at the boundary along the X-axis direction of the microscope slide to be measured, and $f_y(y,b, L_y)$ is a height difference function for the points at the boundary along the Y-axis direction of the microscope slide to be measured;

an equation for calculating a relative height of the standard measuring point with the coordinate $(L_x, L_y)$:

$$D_A((L_x, L_y)) = \frac{(L_x n_{A1} + L_y n_{A2} + (z_{A4} - z_{A1}) n_{A3})}{\sqrt{n_{A1}^2 + n_{A2}^2 + n_{A3}^2}} \quad (3)$$

wherein, $z_{A1} = Z_A(0, 0)$, $z_{A4} = Z_A(L_x, L_y)$;

$$n_{A1} = L_y(z_{A1} - z_{A3}), \quad n_{A2} = L_x (z_{A1} - z_{A5}), \quad n_{A3} = L_x L_y , \quad (4)$$

wherein, $z_{A3} = Z_A(L_x, 0)$, $z_{A5} = Z_A(0, L_y)$;

and an equation for converting the relative height $D_A(x, y)$ of any one of the points in the measuring region of the microscope slide to be measured into the height $Z_A(x, y)$:

$$D_A(x, y) \sqrt{n_{A1}^2 + n_{A2}^2 + n_{A3}^2} = n_{A1} x + n_{A2} y + n_{A3}(Z_A(x, y) - z_{A1}) \quad (5)$$

obtaining an equation set about unknown numbers $a$, $b$, $z_{A1}$, $z_{A3}$, $z_{A4}$ and $z_{A5}$ according to the previous equations (1), (2), (3), (4) and (5):

$$
\begin{cases}
D_A(x_i, y_i) = \dfrac{(x n_{B1} + (Z_B(x_i, 0) - z_{B1}) n_{B3})}{\sqrt{n_{B1}^2 + n_{B2}^2 + n_{B3}^2}} + f_x(x_i, a, L_x) + \dfrac{(y n_{B2} + (Z_B(0, y_i) - z_{B1}) n_{B3})}{\sqrt{n_{B1}^2 + n_{B2}^2 + n_{B3}^2}} \\
\qquad + f_y(y_i, b, L_y) + \dfrac{x_i y_i}{L_x L_y} \dfrac{(L_x n_{A1} + L_y n_{A2} + (z_{A4} - z_{A1}) n_{A3})}{\sqrt{n_{A1}^2 + n_{A2}^2 + n_{A3}^2}} \\
D_A(x_i, y_i) \sqrt{n_{A1}^2 + n_{A2}^2 + n_{A3}^2} = n_{A1} x + n_{A2} y + n_{A3}(z_i - z_{A1}) \\
n_{B1} = L_y(z_{B1} - z_{B3}), \quad n_{B2} = L_x (z_{B1} - z_{B5}), \quad n_{B3} = L_x L_y \\
n_{A1} = L_y(z_{A1} - z_{A3}), \quad n_{A2} = L_x (z_{A1} - z_{A5}), \quad n_{A3} = L_x L_y
\end{cases}
$$

$$(6)$$

;and measuring the coordinates and the heights of any at least six standard measuring points in the measuring region of the microscope slide to be measured to obtain an input $(x_i, y_i, z_i)$, substituting the input into the equation set (6) to obtain a functional equation of the coordinates and the heights, and then inputting the coordinate $(x, y)$ of any one of the standard measuring points on the microscope slide to be measured to obtain the corresponding height $Z_A(x, y)$;

step 4, after obtaining the heights of the standard measuring points in each of the surface regions on the microscope slide to be measured, a calculation module of the microscope being capable of deducing according to the height the distance between the lens and the microscope slide to be measured when the samples in the surface region corresponding to each of the standard measuring points on the microscope slide to be measured are imaged clearly and obtaining a position point of the lens within the scope of a microscope measurement system; and the movement mechanism driving the lens to move to the position point; and

step 5, after moving the lens to the position point, the microscope photographing or scanning and imaging the samples automatically, and converting into data for storage.

After completing the above steps, the driving mechanism moves the object stage so that the lens moves to a next standard measuring point. Since the heights of all the standard measuring points are known and the DOF is fixed, the movement mechanism automatically drives the lens to move in the vertical direction so that the distance between the lens and the microscope slide is appropriate and conforms to the DOF when observing each of the standard measuring points. The automatic imaging of each of the standard measuring points is automatically completed according to above principle.

The present invention has beneficial effects that the heights on the curved surface of any one of the microscope slides can be accurately measured, and the method for measuring and calculating the heights on the curved surface can be applied to automatic scanning microscopes to realize the fast micro image scanning of sample objects on the microscope slides. Particularly under high-power lens, advantages of high imaging definition, high scanning speed, high efficiency and automation of the present invention are more outstanding.

BRIEF DESCRIPTION **OF THE** DRAWINGS

In order to illustrate the technical solutions in embodiments of the present invention or in the prior art more clearly, drawings to be used in description of embodiments or the prior art will be introduced briefly below.

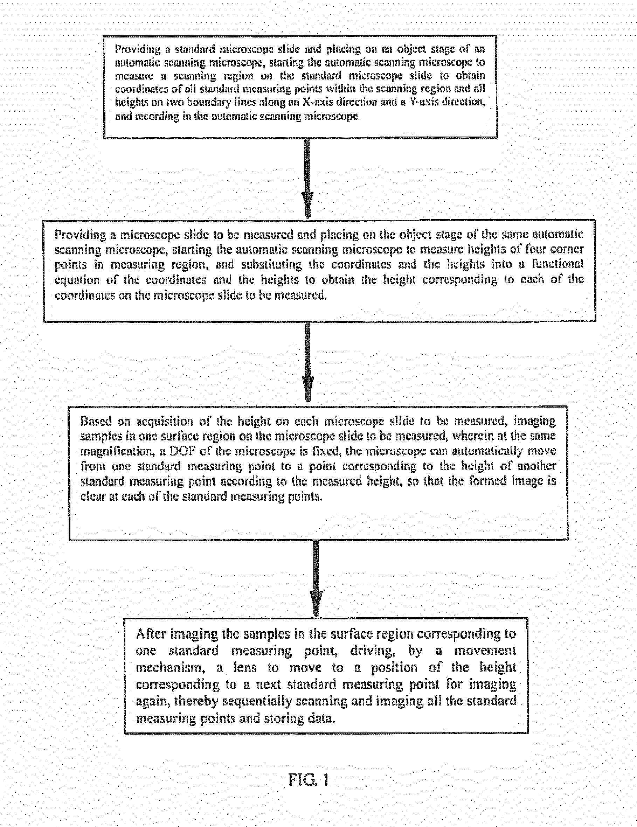

Fig. 1 is a flow chart showing steps for scanning a sample with a microscope according the present invention.

DETAILED DESCRIPTION OF THE EMBODIMENTS

The technical solutions in embodiments of the present disclosure are clearly and completely described below with reference to the drawings in embodiments of the present disclosure.

Steps of a method for measuring and calculating heights on a curved surface of a microscope slide are described below in two embodiments.

Embodiment 1:

Scanning of standard microscope slides: preparing a plurality of standard microscope slides; taking a plurality of blank microscope slides; uniformly coating a single layer of the sample on the microscope slides; accurately placing the microscope slides on a sample rack of a scanning instrument; setting a software to define a scanning region of 2.5 cm x 1.5 cm in length and width; sampling scanning the region with 27 visual fields scanned at equal intervals in an X-axis direction, 13 visual fields scanned at equal intervals in a Y-axis direction and 351 visual fields sampled in the overall region; and after dropping oil onto the sample, using an NA1.25 100x lens of olympus company to focus a first line x(i, 0) (a value of i is 0-26) so as to obtain 27 focused heights $Z_B(i, 0)$ on an x axis: 0.5,0.684568671, 0.913734812, 0.960046768, 1.024200047, 0.785085559, 0.871537623, 0.873252109, 0.464664036, 0.591254547, 0.601890489, 0.313716038, 0.444767363, 0.040638322, 0.055733448, -0.000528566, 0.143899998, -0.019396768, 0.111652866, 0.153505749, 0.231037957, 0.170316971, 0.105135102, -0.018024878, -0.011849608, 0.079061529, 0.5.

Focusing a coordinate of the first line in the Y-axis direction y(0, j) (a value of j is 0-12) to obtain 13 focused heights $Z_B(0, j)$ in a y axis: 0.871537622679038, 0.461904370950109, 0.480413250090982, 0.695155343637005, 0.330119561867232, 0.241593788675321, 0.367140841687643, 0.189416607038756, - 0.153318678982108, -0.0812907632132054, 0.0754714097549614, -0.276182022011501, - 0.382547507617886.

A focused height of the coordinate (26, 12) is 0.5.

Relative heights of standard measuring points on a boundary along the X-axis direction of the standard microscope slides are:

$$D_B(x, 0) = \frac{(xn_{B1} + (Z_B(x, 0) - z_{B1})n_{B3})}{\sqrt{n_{B1}^2 + n_{B2}^2 + n_{B3}^2}} \qquad (1)$$

wherein x = 0, ... 26;

$z_{B1} = Z_B(0, 0)$, $z_{B3} = Z_B(L_x, 0)$, $z_{B4} = Z_B(L_x, L_y)$,
$n_{B1} = L_y(z_{B1} - z_{B3})$, $n_{B2} = L_x (z_{B1} - z_{B5})$, $n_{B3} = L_x L_y$, $z_{B5} = Z_B(0, L_y)$,
then

$$D_B(i, 0), \quad i = 0, \cdots, 26.$$

0, -0.1834, -0.4112, -0.4572, -0.5210, -0.2833, -0.3693, -0.3710, 0.0351, -0.0907, -0.1013, 0.1851, 0.0549, 0.4566, 0.4415, 0.4975, 0.3539, 0.5162, 0.3860, 0.3444, 0.2673, 0.3277, 0.3924, 0.5149, 0.5087, 0.4184, 0.

Relative heights of standard measuring points on a boundary along the Y-axis direction of the standard microscope slides are:

$$D_B(0, y) = \frac{(y n_{B2} + (z_B(0, y) - z_{B1}) n_{B3})}{\sqrt{n_{B1}^2 + n_{B2}^2 + n_{B3}^2}} \tag{2}$$

wherein y = 0, ... 12;

$z_{B1} = Z_B(0, 0)$, $z_{B3} = Z_B(L_x, 0)$, $z_{B4} = Z_B(L_x, L_y)$,
$n_{B1} = L_y(z_{B1} - z_{B3})$, $n_{B2} = L_x (z_{B1} - z_{B5})$, $n_{B3} = L_x L_y$, $z_{B5} = Z_B(0, L_y)$,
then

$$D_B(0, j), \quad j = 0, \cdots, 12.$$

0, 0.3033, 0.1810, -0.1363, 0.1226, 0.1068, -0.1219, -0.0491, 0.1876, 0.0122, -0.2475, -0.0018, -0.0000.

Scanning of the microscope slide to be measured: after dropping oil on the microscope slide to be measured, accurately placing the microscope slides to be measured on the sample rack, and selecting any 6 visual fields from the 351 sampled visual fields in the software (in order to improve the calculation accuracy, the selection conditions of the 6 visual fields are as follows: 1. the coverage area is as large as possible; 2. the 6 visual fields are distributed as follows: 5 of them form a pentagon, and the 6th one lie in a center of the pentagon). The coordinates $(x_i, y_i)$, $i$=1, ..., 6 of the 6 visual fields are (0, 0), (13, 0), (26, 0), (0, 6), (0, 12) and (26, 12).

Using the NA1.25 100x lens of olympus company to focus the 6 visual fields to obtain the focused heights $z_i$, $i$=1, ..., 6 of 5.59, 9.770, 7.127, 8.053, 7.674 and 9.27.

A height difference function for the points on the boundary along the Y-axis direction of the microscope slide to be measured is:

$$f_x(x, a, L_x) = \frac{4ax(x - L_x)}{L_x^2}$$

A height difference function for the points on the boundary along the Y-axis direction of the microscope slide to be measured is:

$$f_y(y, b, L_y) = \frac{4ay(x - L_y)}{L_y^2}$$

The relative height of the standard measuring point with a coordinate $(L_x, L_y)$ is

$$D_A\big((L_x, L_y\big) = \frac{\big(L_x n_{A1} + L_y n_{A2} + (z_{A4} - z_{A1}) n_{A3}\big)}{\sqrt{n_{A1}^2 + n_{A2}^2 + n_{A3}^2}} \tag{3};$$

wherein, $z_{A1} = Z_A(0, 0)$, $z_{A4} = Z_A(L_x, L_y)$.

$$n_{A1} = L_y\big(z_{A1} - z_{A3}\big), \quad n_{A2} = L_x\big(z_{A1} - z_{A5}\big), \quad n_{A3} = L_x L_y, \tag{4};$$

wherein $z_{A3} = Z_A(L_x, 0)$, $z_{A5} = Z_A(0, L_y)$.

An equation for converting the relative height $D_A(x, y)$ of any one of the points within the measuring region on the microscope slide to be measured into the height $Z_A(x, y)$ is:

$$D_A(x, y)\sqrt{n_{A1}^2 + n_{A2}^2 + n_{A3}^2} = n_{A1}x + n_{A2}y + n_{A3}\big(Z_A(x, y) - z_{A1}\big) \tag{5};$$

Obtaining an equation set about unknown numbers a, b, $z_{A1}$, $z_{A3}$, $z_{A4}$ and $z_{A5}$ according to the previous equations (1), (2), (3), (4) and (5):

$$\begin{cases} D_A(x_i, y_i) = \dfrac{\big(x n_{B1} + (Z_B(x_i, 0) - z_{B1}) n_{B3}\big)}{\sqrt{n_{B1}^2 + n_{B2}^2 + n_{B3}^2}} + f_x(x_i, a, L_x) + \dfrac{\big(y n_{B2} + (Z_B(0, y_i) - z_{B1}) n_{B3}\big)}{\sqrt{n_{B1}^2 + n_{B2}^2 + n_{B3}^2}} \\[4mm] \qquad + f_y(y_i, b, L_y) + \dfrac{x_i y_i}{L_x L_y}\dfrac{\big(L_x n_{A1} + L_y n_{A2} + (z_{A4} - z_{A1}) n_{A3}\big)}{\sqrt{n_{A1}^2 + n_{A2}^2 + n_{A3}^2}} \\[4mm] D_A(x_i, y_i)\sqrt{n_{A1}^2 + n_{A2}^2 + n_{A3}^2} = n_{A1}x + n_{A2}y + n_{A3}\big(z_i - z_{A1}\big) \\[2mm] n_{B1} = L_y(z_{B1} - z_{B3}), \quad n_{B2} = L_x(z_{B1} - z_{B5}), \quad n_{B3} = L_x L_y \\[2mm] n_{A1} = L_y(z_{A1} - z_{A3}), \quad n_{A2} = L_x(z_{A1} - z_{A5}), \quad n_{A3} = L_x L_y \end{cases} \tag{6}$$

Solving to obtain values of the unknown numbers a, b, $z_{A1}$, $z_{A3}$, $z_{A4}$ and $z_{A5}$ respectively: 3.7463, 1.2755, 5.59, 7.127, 10.530 and 7.674.

Substituting the above values into the equation set (6) to obtain all the heights $Z_A(x_i, y_i)$, i=0, ..., 12, j=0, ..., 26, of the 351 sampled focused points $(x_i, y_i)$, i=0, ..., 12, j=0, ..., 26, as follows:
A data table of the heights of all the 351 focused points:

| 55 | | | | 50 | | | | 45 | | | | 40 | | | | 35 | | | | 30 | | | | 25 | | | | 20 | | | | 15 | | | | 10 | | | | 5 |
|---|---|---|---|---|---|---|---|---|---|---|---|---|---|---|---|---|---|---|---|---|---|---|---|---|---|---|

5.59 6.40 7.21 7.79 8.34 8.54 9.02 9.38 9.27 9.66 9.89 9.77 10.03 9.70 9.75 9.69 9.78 9.52 9.51 9.36 9.21 8.86 8.47 7.98 7.57 7.21 7.13

5.85 6.66 7.47 8.05 8.60 8.80 9.29 9.64 9.54 9.93 10.15 10.03 10.29 9.97 10.02 9.95 10.05 9.78 9.77 9.63 9.47 9.13 8.74 8.25 7.84 7.47 7.39

6.47 7.28 8.09 8.67 9.22 9.43 9.91 10.26 10.16 10.55 10.78 10.66 10.92 10.59 10.64 10.58 10.67 10.41 10.40 10.25 10.10 9.76 9.37 8.87 8.47 8.10 8.02

7.22 8.03 8.84 9.42 9.97 10.18 10.66 11.01 10.91 11.30 11.53 11.41 11.67 11.34 11.40 11.33 11.42 11.16 11.15 11.00 10.85 10.51 10.12 9.63 9.22 8.85 8.77

7.31 8.12 8.93 9.51 10.07 10.27 10.75 11.11 11.00 11.39 11.62 11.50 11.76 11.44 11.49 11.42 11.52 11.25 11.24 11.10 10.94 10.60 10.21 9.72 9.31 8.95 8.87

7.61 8.42 9.23 9.81 10.36 10.57 11.05 11.41 11.30 11.69 11.92 11.80 12.06 11.74 11.79 11.72 11.82 11.56 11.55 11.40 11.24 10.91 10.52 10.02 9.62 9.25 9.17

8.05 8.86 9.67 10.25 10.81 11.01 11.49 11.85 11.74 12.14 12.36 12.25 12.51 12.18 12.23 12.17 12.26 12.00 11.99 11.85 11.69 11.35 10.96 10.47 10.06 9.70 9.62

8.12 8.93 9.74 10.32 10.87 11.07 11.56 11.91 11.81 12.20 12.43 12.31 12.57 12.25 12.30 12.24 12.33 12.07 12.06 11.91 11.76 11.42 11.03 10.54 10.13 9.77 9.69

7.94 8.75 9.56 10.14 10.70 10.90 11.39 11.14 11.64 12.03 12.26 12.14 12.40 12.07 12.13 12.06 12.16 11.90 11.89 11.74 11.59 11.25 10.86 10.37 9.96 9.60 9.52

8.11 8.92 9.73 10.32 10.87 11.07 11.56 11.91 11.81 12.20 12.43 12.31 12.57 12.25 12.30 12.24 12.33 12.07 12.06 11.92 11.76 11.42 11.04 10.54 10.14 9.77 9.70

8.30 9.11 9.92 10.50 11.06 11.26 11.74 12.10 12.00 12.39 12.62 12.50 12.76 12.44 12.49 12.43 12.52 12.26 12.25 12.11 11.95 11.61 11.23 10.73 10.33 9.96 9.89

7.90 8.71 9.52 10.10 10.66 10.86 11.35 11.70 11.60 11.99 12.22 12.10 12.36 12.04 12.09 12.03 12.12 11.86 11.85 11.71 11.56 11.22 10.83 10.34 9.93 9.57 9.49

7.67 8.49 9.30 9.88 10.43 10.64 11.12 11.48 11.38 11.77 12.00 11.88 12.14 11.82 11.87 11.81 11.90 11.64 11.63 11.49 11.34 11.00 10.61 10.12 9.71 9.35 9.27

Embodiment 2: a microscopic scanning method of the microscope:
Scanning patterns of the samples on the microscope slides by applying the heights on the curved surfaces of the microscope slides obtained in the embodiment 1.

A single layer of samples (which are microspheres uniform in size in the present embodiment) are uniformly coated on the microscope slides. The software is set to define the scanning region of 2.5 cm x 1.5 cm in length and width. The region is sampling scanned by the microscope with 27 visual fields scanned at equal intervals in the X-axis direction, 13 visual fields scanned at equal intervals in the Y-axis direction, and 351 visual fields sampled in the overall region. The microspheres are uniformly distributed in the 351 visual fields.

The heights of the focused points within the 351 visual fields are obtained by the method of the embodiment 1. Under the NA1.25 100x lens, the DOF of the microscope lens is fixed. Therefore, it only needs to adjust a distance $\Delta h$ between the lens and the sample under the corresponding focused point to meet the DOF. If $Z_A(x_0, y_0) = 5.59$ is known and the distance between the sample and the lens satisfies the DOF during sampling scanning, the movement mechanism of the microscope lens will automatically move to the height corresponding to $Z_A(x_{12}, y_{26})$ when $Z_A(x_{12}, y_{26})$ = 9.27 is scanned; and the distance between the sample and the lens satisfying the DOF for clear imaging is ensured at the same time. Due to the automation technology, the lens is enabled to automatically move along 351 sampling points in sequence to take a photo of each visual field at the height of each point, thereby completing the sampling scanning on the scanning region of 2.5 cm x 1.5 cm.

It is important to note that the heights of the same standard microscope slide measured in different devices are different. However, the position points in the measurement systems corresponding to the heights are the same. More clearly, the relative distance between the standard measuring points on the microscope slide is fixed. Thus, changes of the measured height of the same microscope slide in different measurement systems will not lead to the change of the distance between the standard measuring points; and the movement mechanism is still capable of driving the lens to the position point corresponding to the height in the measurement system of the measurement device, thereby achieving the purpose of enabling the lens to move to the corresponding position point for clear imaging and the purpose of automatic scanning.

The above description of embodiments disclosed in the present disclosure enables those skilled in the art to realize or use the present invention. The present invention is not limited to these embodiments. The scope of protection is defined in the appended claims.

**Claims**

1. A method for measuring and calculating heights on a curved surface of a microscope slide, comprising:

    dividing a measuring region of a known standard microscope slide into a plurality of surface regions, wherein a length of the measuring region along the X-axis direction is $L_x$, a length along the Y-axis direction is $L_y$, a coordinate of a standard measuring point B on any one of the surface regions within the measuring region is (x, y), a height of said standard measurement point is measured as $Z_B(x,y)$, and coordinates of points at four corners of the measuring region in a clockwise direction are (0, 0), $(L_x,0)$, $(L_x,L_y)$ and $(0,L_y)$ respectively; measuring the coordinates of the standard measuring points in each of the surface regions within the measuring region; and measuring at least all the heights $Z_B(x, 0)$ and $Z_B(0, y)$ on two boundary lines along the X-axis direction and along the Y-axis direction and a height $Z_B(L_x,L_y)$ of a point with a coordinate $(L_x,L_y)$;
    providing another microscope slide with the same size as the standard microscope slide, wherein the coordinates of the points at the four corners of the measuring region of the microscope slide to be measured are (0, 0), $(L_x, 0)$, $(L_x,L_y)$ and $(0, L_y)$; the heights of the points at the four corners are $Z_A(0, 0)$, $Z_A(L_x, 0)$, $Z_A(L_x, L_y)$ and $Z_A(0, L_y)$ respectively; then a point A with a coordinate (x, y) corresponding to a standard measuring point with a coordinate (x, y) in the measuring region of the standard microscope slide necessarily exists in the measuring region of the microscope slide to be measured; and a height of the point A is $Z_A(x, y)$;
    combining the following equations:

        an equation for calculating a relative height of the standard measuring point on a boundary of the standard microscope slide:

$$D_B(x,0)= \frac{(xn_{B1}+(Z_B(x,0)-z_{B1})n_{B3})}{\sqrt{n_{B1}^2+n_{B2}^2+n_{B3}^2}}$$

$$D_B(0,y)= \frac{(yn_{B2}+(Z_B(0,y)-z_{B1})n_{B3})}{\sqrt{n_{B1}^2+n_{B2}^2+n_{B3}^2}} \qquad (1)$$

wherein,

$z_{B1} = Z_B(0, 0)$, $z_{B3} = Z_B(L_x, 0)$, $z_{B4} = Z_B(L_x,L_y)$,

$n_{B1} = L_y(z_{B1} - Z_{B3})$, $n_{B2} = L_x (z_{B1} - z_{B5})$, $n_{B3} = L_xL_y$,

$z_{B5} = Z_B(0, L_y)$, and

$(n_{B1}, n_{B2}, n_{B3})$ is a normal vector of a plane defined by three standard measuring points with the coordinates $(0, 0)$, $(L_x, 0)$ and $(0, L_y)$ on the standard microscope slide;

an equation for calculating a relative height of any one of the standard measuring points in the measuring region on the microscope slide to be measured:

$$D_A(x, y) = D_B(x,0) + f_x(x,a, L_x) + D_B(0,y) + f_y(y, b, L_y) + \frac{xyD_A(L_x,L_y)}{L_xL_y} \qquad (2)$$

wherein, $f_x(x, a, L_x)$ is a height difference function for the points at the boundary along the X-axis direction of the microscope slide to be measured, and $f_y(y, b, L_y)$ is a height difference function for the points at the boundary along the Y-axis direction of the microscope slide to be measured;

an equation for calculating a relative height of the standard measuring point with the coordinate $(L_x, L_y)$:

$$D_A((L_x, L_y) = \frac{(L_x n_{A1}+ L_y n_{A2}+(z_{A4}-z_{A1})n_{A3})}{\sqrt{n_{A1}^2+ n_{A2}^2+ n_{A3}^2}} \qquad (3)$$

wherein, $z_{A1} = Z_A(0, 0)$, $z_{A4} = Z_A(L_x, L_y)$;

$$n_{A1} = L_y(z_{A1} - z_{A3}), \ n_{A2} = L_x (z_{A1} - z_{A5}), \ n_{A3} = L_xL_y , \qquad (4);$$

wherein, $z_{A3} = Z_A(L_x, 0)$, $z_{A5} = Z_A(0, L_y)$;

and an equation for converting the relative height $D_A(x, y)$ of any one of the points in the measuring region on the microscope slide to be measured into the height $Z_A(x, y)$:

$$D_A(x, y) \sqrt{n_{A1}^2+n_{A2}^2+n_{A3}^2} = n_{A1}x+n_{A2}y+n_{A3}(Z_A(x, y) - z_{A1}) \qquad (5) ;$$

obtaining an equation set about unknown numbers $a$, $b$, $z_{A1}$, $z_{A3}$, $z_{A4}$ and $z_{A5}$ according to the previous equations (1), (2), (3), (4) and (5):

$$D_A(x_i, y_i) = \frac{(xn_{B1}+(Z_B(x_i,0)-z_{B1})n_{B3})}{\sqrt{n_{B1}^2+n_{B2}^2+n_{B3}^2}} + f_x(x_i, a, L_x) + \frac{(yn_{B2}+(Z_B(0,y_i)-z_{B1})n_{B3})}{\sqrt{n_{B1}^2+n_{B2}^2+n_{B3}^2}}$$

$$+ f_y(y_i, b, L_y) + \frac{x_i\, y_i}{L_xL_y} \frac{(L_xn_{A1}+ L_yn_{A2}+(z_{A4}-z_{A1})n_{A3})}{\sqrt{n_{A1}^2+ n_{A2}^2+ n_{A3}^2}}$$

$$D_A(x_i, y_i)\sqrt{n_{A1}^2+ n_{A2}^2+ n_{A3}^2} = n_{A1}x + n_{A2}y + n_{A3}(z_i - z_{A1})$$

$$n_{B1} = L_y(z_{B1} - z_{B3}),\ n_{B2} = L_x(z_{B1} - z_{B5}),\ n_{B3} = L_xL_y$$

$$n_{A1} = L_y(z_{A1}-z_{A3}),\ n_{A2} = L_x(z_{A1} - z_{A5}),\ n_{A3} = L_xL_y$$

$$(6);$$

measuring the coordinates and the heights of any at least six standard measuring points in the measuring region of the microscope slide to be measured to obtain an input $(x_i, y_i, z_i)$, substituting the input into the equation set (6) to obtain a functional equation of the coordinates and the heights, and then inputting the coordinate $(x, y)$ of any one of the standard measuring points on the microscope slide to be measured to obtain the corresponding height $Z_A(x, y)$.

**2.** The method according to claim 1, wherein a is a parameter of the height difference function for the points on the boundary along the X-axis direction of the microscope slide to be measured; and b is a parameter of the height difference function for the points on the boundary along the Y-axis direction of the microscope slide to be measured.

**3.** A scanning method comprising the method for measuring and calculating the heights on the curved surface of the microscope slide according to claim 1 or 2, wherein the scanning method is capable of obtaining an image of a sample placed on any one of the surface regions of the microscope slide to be measured and capable of realizing automatic scanning to obtain images of all the samples placed on the microscope slide to be measured.

**4.** A microscope configured to perform the method according to claim 2 or the method according to claim 3.

**5.** The microscope according to claim 4 and configured to perform the scanning method according to claim 3, wherein the microscope comprises a movement mechanism which is capable of moving up and down to adjust a distance between the microscope lens and the microscope slide; the height of each of the standard measuring points within a scanning scope of the microscope being obtainable by using said method for measuring and calculating the heights on the curved surface of the microscope slide; the movement mechanism being configured to automatically adjust the distance between the lens and the microscope slide according to the heights obtained to ensure clear imaging; and the formed image being scanned or photographed forming image data for storage.

**6.** The microscope according to claim 4, configured to automatically scan and image samples on a microscope slide and store as data according to the method of claim 1, said microscope further comprising a calculation module configured to deduce according to the height, after obtaining the heights of the standard measuring points in each of the surface regions on the microscope slide to be measured, the distance between the lens and the microscope slide to be measured when the samples in the surface region corresponding to each of the standard measuring points on the microscope slide to be measured are imaged clearly and to obtain a position point of the lens within the scope of a microscope measurement system; and the movement mechanism being configured to drive the lens to move to the position point; and after moving the lens to the position point, the microscope being configured to photograph or scan and image the samples automatically, and to convert said photograph or image into data for storage.

**Patentansprüche**

**1.** Verfahren zum Messen und Berechnen von Höhen auf einer gekrümmten Oberfläche eines Objektträgers, umfassend:

Unterteilen eines Messbereichs eines bekannten Standard-Objektträgers in eine Vielzahl von Oberflächenbereichen, wobei eine Länge des Messbereichs entlang der X-Achsenrichtung $L_x$ ist, eine Länge entlang der Y-Achsenrichtung $L_y$ ist, eine Koordinate eines Standardmesspunkts B auf einem der Oberflächenbereiche innerhalb des Messbereichs (x, y) ist, eine Höhe des Standardmesspunkts als $Z_B$ (x, y) gemessen wird, und die Koordinaten von Punkten an vier Ecken des Messbereichs im Uhrzeigersinn (0, 0), ($L_x$, 0), ($L_x$, $L_y$) bzw. (0, $L_y$) sind; Messen der Koordinaten der Standardmesspunkte in jedem der Oberflächenbereiche innerhalb des Messbereichs; und Messen mindestens aller Höhen $Z_B$(x, 0) und $Z_B$(0, y) auf zwei Grenzlinien entlang der X-Achsenrichtung und entlang der Y-Achsenrichtung und einer Höhe $Z_B$($L_x$, $L_y$) eines Punktes mit einer Koordinate ($L_x$, $L_y$);

Bereitstellen eines weiteren Objektträgers mit der gleichen Größe wie der Standard-Objektträger, wobei die Koordinaten der Punkte an den vier Ecken des Messbereichs des zu messenden Objektträgers (0, 0), ($L_x$, 0), ($L_x$, $L_y$) bzw. (0, $L_y$) sind; die Höhen der Punkte an den vier Ecken $Z_A$(0, 0), $Z_A$($L_x$, 0), $Z_A$($L_x$, $L_y$) bzw. $Z_A$(0, $L_y$) sind; dann ein Punkt A mit einer Koordinate (x, y), der einem Standardmesspunkt mit einer Koordinate (x, y) im Messbereich des Standard-Objektträgers entspricht, notwendigerweise im Messbereich des zu messenden Objektträgers vorhanden ist; und eine Höhe des Punktes A $Z_A$(x, y) ist;

Kombinieren der folgenden Gleichungen:

eine Gleichung zum Berechnen einer relativen Höhe des Standardmesspunktes auf einer Grenze des Standard-Objektträgers:

$$D_B(x, 0) = \frac{(xn_{B1} + (Z_B(x, 0) - z_{B1})n_{B3})}{\sqrt{n_{B1}^2 + n_{B2}^2 + n_{B3}^2}}$$

$$D_B(0, y) = \frac{(yn_{B2} + (Z_B(0, y) - z_{B1})n_{B3})}{\sqrt{n_{B1}^2 + n_{B2}^2 + n_{B3}^2}}$$

(1)

wobei
$z_{B1}$ = $Z_B$(0, 0), $z_{B3}$ = $Z_B$($L_x$, 0), $z_{B4}$ = $Z_B$($L_x$, Ly),
$n_{B1}$ = $L_y$($z_{B1}$ - $z_{B3}$), $n_{B2}$ = $L_x$ ($z_{B1}$ - $z_{B5}$), $n_{B3}$ = $L_x L_y$,
$z_{B5}$ = $Z_B$(0, $L_y$), und
($n_{B1}$, $n_{B2}$, $n_{B3}$) ein Normalvektor einer Ebene ist, die durch drei Standardmesspunkte mit den Koordinaten (0, 0), ($L_x$, 0) und (0, $L_y$) auf dem Standard-Objektträger definiert ist;

eine Gleichung zum Berechnen einer relativen Höhe von einem der Standardmesspunkte im Messbereich des zu messenden Objektträgers:

$$D_A(x, y) = D_B(x, 0) + f_x(x, a, L_x) + D_B(0, y) + f_x(y, b, L_x) + \frac{xyD_A(L_x, L_y)}{L_x L_y}$$

(2)

wobei $f_x$(x, a, $L_x$) eine Höhendifferenzfunktion für die Punkte an der Grenze entlang der X-Achsenrichtung des zu messenden Objektträgers ist, und $f_y$(y, b, $L_y$) eine Höhendifferenzfunktion für die Punkte an der Grenze entlang der Y-Achsenrichtung des zu messenden Objektträgers ist;

eine Gleichung zum Berechnen einer relativen Höhe des Standardmesspunktes mit der Koordinate ($L_x$, $L_y$):

$$D_A((L_x, L_y) = \frac{(L_x n_{A1} + L_y n_{A2} + (z_{A4} - z_{A1})n_{A3})}{\sqrt{n_{A1}^2 + n_{A2}^2 + n_{A3}^2}}$$

(3)

wobei $z_{A1}$ = $Z_A$(0, 0), $z_{A4}$ = $Z_A$($L_x$, $L_y$);

$$n_{A1} = L_y(z_{A1} - z_{A3}), n_{A2} = L_x(z_{A1} - z_{A5}), n_{A3} = L_x L_y,$$

(4)

wobei $z_{A3} = Z_A(L_x, 0)$, $z_{A5} = Z_A(0, L_y)$;
und eine Gleichung zum Umrechnen der relativen Höhe $D_A(x, y)$ von einem der Punkte im Messbereich auf dem zu messenden Objektträger in die Höhe $Z_A(x, y)$:

$$D_A(x, y)\sqrt{n_{A1}^2 + n_{A2}^2 + n_{A3}^2} = n_{A1}x + n_{A2}y + n_{A3}(Z_A(x, y) - z_{A1}) \tag{5}$$

Erhalten eines Gleichungssatzes über unbekannte Zahlen a, b, $z_{a1}$, $z_{A3}$, $z_{A4}$ und $z_{A5}$ gemäß den vorherigen Gleichungen (1), (2), (3), (4) und (5):

$$\left\{\begin{array}{l} D_A(x_i, y_i) = \dfrac{xn_{B1} + (Z_B(x_i, 0) - z_{B1})n_{B3}}{\sqrt{n_{B1}^2 + n_{B2}^2 + n_{B3}^2}} + f_x\left(x_i, a, L_x + \dfrac{yn_{B2} + (Z_B(0, y_i) - z_{B1})n_{B3}}{\sqrt{n_{B1}^2 + n_{B2}^2 + n_{B3}^2}}\right. \\[4mm] \left. \quad + f_y(y_i, b, L_y) + \dfrac{x_i y_i}{L_x L_y}\dfrac{(L_x n_{A1} + L_y n_{A2} + (z_{A4} - z_{A1})n_{A3})}{\sqrt{n_{A1}^2 + n_{A2}^2 + n_{A3}^2}}\right. \\[4mm] D_A(x_i, y_i)\sqrt{n_{A1}^2 + n_{A2}^2 + n_{A3}^2} = n_{A1}x + n_{A2}y + n_{A3}(z_i - z_{A1}) \\[2mm] n_{B1} = L_y(z_{B1} - z_{B3}), n_{B2} = L_x(z_{B1} - z_{B5}), n_{B3} = L_x L_y \\[2mm] n_{A1} = L_y(z_{A1} - z_{A3}), n_{A2} = L_x(z_{A1} - z_{A5}), n_{A3} = L_x L_y \end{array}\right.$$

$$\tag{6};$$

Messen der Koordinaten und der Höhen von einem aus mindestens sechs beliebigen Standardmesspunkten im Messbereich des zu messenden Objektträgers, um eine Eingabe $(x_i, y_i, z_i)$ zu erhalten, Einsetzen der Eingabe in den Gleichungssatz (6), um eine Funktionsgleichung der Koordinaten und der Höhen zu erhalten, und anschließendes Eingeben der Koordinate $(x, y)$ von einem der Standardmesspunkte auf dem zu messenden Objektträger, um die entsprechende Höhe $Z_A(x, y)$ zu erhalten.

2. Verfahren nach Anspruch 1, wobei a ein Parameter der Höhendifferenzfunktion für die Punkte auf der Grenze entlang der X-Achsenrichtung des zu messenden Objektträgers ist; und b ein Parameter der Höhendifferenzfunktion für die Punkte auf der Grenze entlang der Y-Achsenrichtung des zu messenden Objektträgers ist.

3. Abtastverfahren, umfassend das Verfahren zum Messen und Berechnen der Höhen auf der gekrümmten Oberfläche des Objektträgers nach Anspruch 1 oder 2, wobei das Abtastverfahren in der Lage ist, ein Bild einer Probe zu erhalten, die auf einem der Oberflächenbereiche des zu messenden Objektträgers angeordnet ist, und in der Lage ist, ein automatisches Abtasten zu realisieren, um Bilder aller auf dem zu messenden Objektträger angeordneten Proben zu erhalten.

4. Mikroskop, das dazu konfiguriert ist, das Verfahren nach Anspruch 2 oder das Verfahren nach Anspruch 3 durchzuführen.

5. Mikroskop nach Anspruch 4, das dazu konfiguriert ist, das Abtastverfahren nach Anspruch 3 durchzuführen, wobei das Mikroskop einen Bewegungsmechanismus umfasst, der in der Lage ist, sich auf und ab zu bewegen, um einen Abstand zwischen der Mikroskoplinse und dem Objektträger einzustellen; wobei die Höhe jedes der Standardmesspunkte innerhalb eines Abtastbereichs des Mikroskops durch Verwendung des Verfahrens zum Messen und Berechnen der Höhen auf der gekrümmten Oberfläche des Objektträgers erhalten werden kann; wobei der Bewegungsmechanismus dazu konfiguriert ist, den Abstand zwischen der Linse und dem Objektträger entsprechend den erhaltenen Höhen automatisch einzustellen, um eine klare Abbildung sicherzustellen; und wobei das erzeugte Bild abgetastet oder fotografiert wird, um Bilddaten zur Speicherung zu erzeugen.

6. Mikroskop nach Anspruch 4, das dazu konfiguriert ist, automatisch Proben auf einem Objektträger abzutasten und abzubilden und gemäß dem Verfahren nach Anspruch 1 als Daten zu speichern, wobei das Mikroskop ferner ein Berechnungsmodul umfasst, das dazu konfiguriert ist, nach dem Erhalten der Höhen der Standardmesspunkte in jedem der Oberflächenbereiche auf dem zu messenden Objektträger entsprechend der Höhe den Abstand zwischen der Linse und dem zu messenden Objektträger abzuleiten, wenn die Proben in dem Oberflächenbereich, der jedem der Standardmesspunkte auf dem zu messenden Objektträger entspricht, klar abgebildet werden, und einen Positionspunkt der Linse innerhalb des Bereichs eines Mikroskop-Messsystems zu erhalten; und der Bewegungsmechanismus dazu konfiguriert ist, die Linse anzutreiben, um sich zu dem Positionspunkt zu bewegen; und das Mikroskop dazu konfiguriert ist, die Proben automatisch zu fotografieren oder abzutasten und die Fotografie oder das Bild in Daten zur Speicherung umzuwandeln, nachdem die Linse an den Positionspunkt bewegt wurde.

**Revendications**

1. Procédé de mesure et de calcul de hauteurs sur une surface incurvée d'une lame de microscope, comprenant :

la division d'une région de mesure d'une lame de microscope standard connue en une pluralité de régions de surface, dans lequel la longueur de la région de mesure selon la direction de l'axe X est $L_x$, la longueur selon la direction de l'axe Y est $L_y$, les coordonnées d'un point de mesure standard B sur l'une quelconque des régions de surface dans la région de mesure sont (x,y), la hauteur dudit point de mesure standard est mesurée par $Z_B$(x,y), et les coordonnées des points aux quatre coins de la région de mesure en sens horaire sont respectivement (0,0), $(L_x,0)$, $(L_x,L_y)$ et $(0,L_y)$ ; la mesure des coordonnées des points de mesure standard dans chacune des régions de surface à l'intérieur de la région de mesure ; et la mesure d'au moins toutes les hauteurs $Z_B$(x,0) et $Z_B$(0,y) sur deux lignes de délimitation selon la direction de l'axe X et selon la direction de l'axe Y, ainsi que de la hauteur $Z_B(L_x,L_y)$ d'un point aux coordonnées $(L_x, L_y)$ ;

la fourniture d'une autre lame de microscope de même taille que la lame de microscope standard, dans lequel les coordonnées des points aux quatre coins de la région de mesure de la lame de microscope à mesurer sont (0,0), $(L_x,0)$, $(L_x,L_y)$ et $(0,L_y)$ ; les hauteurs des points aux quatre coins sont respectivement $Z_A(0,0)$, $Z_A(L_x,0)$, $Z_A(L_x,L_y)$ et $Z_A(0,L_y)$ ; ensuite un point A avec des coordonnées (x,y) correspondant à un point de mesure standard avec des coordonnées (x,y) dans la région de mesure de la lame de microscope standard existe nécessairement dans la région de mesure de la lame de microscope à mesurer ; et la hauteur du point A est $Z_A$(x,y) ;

la combinaison des équations suivantes :

une équation pour calculer la hauteur relative du point de mesure standard d'une délimitation de la lame de microscope standard :

$$D_B(\text{x},0) = \frac{(\text{xn}_{B1} + (Z_B(\text{x},0) - z_{B1})n_{B3})}{\sqrt{n_{B1}^2 + n_{B2}^2 + n_{B3}^2}}$$

$$D_B(0,\text{y}) = \frac{(\text{yn}_{B2}+(Z_B(0,\text{y})-z_{B1})n_{B3})}{\sqrt{n_{B1}^2+n_{B2}^2+n_{B3}^2}} \qquad (1)$$

dans lesquelles
$z_{B1} = Z_B(0,0)$, $z_{B3} = Z_B(L_x,0)$, $z_{B4} = Z_B(L_x,L_y)$,
$n_{B1} = L_y(z_{B1}-z_{B3})$, $n_{B2}=L_x (z_{B1}-z_{B5})$, $n_{B3} = L_xL_y$,
$z_{B5}=Z_B(0,L_y)$, et
$(n_{B1},n_{B2},n_{B3})$ est un vecteur normal à un plan défini par trois points de mesure standard aux coordonnées (0,0), $(L_x,0)$ et $(0,L_y)$ sur la lame de microscope standard ;

une équation pour calculer la hauteur relative de l'un quelconque des points de mesure standard dans la région de mesure sur la lame de microscope à mesurer :

$$D_A(\text{x},\text{y}) = D_B(\text{x},0) + f_x(\text{x},a,L_x) + D_B(0,\text{y}) + f_y(\text{y},b,L_y) +$$

$$\frac{\text{xy}D_A(L_x,L_y)}{L_xL_y} \qquad (2)$$

dans laquelle $f_x(x,a,L_x)$ est une fonction de différence de hauteur pour les points de la délimitation selon la direction de l'axe X de la lame de microscope à mesurer, et $f_y(y,b,L_y)$ est une fonction de différence de hauteur pour les points à la délimitation selon la direction de l'axe Y de la lame de microscope à mesurer ;

une équation pour calculer la hauteur relative du point de mesure standard des coordonnées $(L_x,L_y)$ :

$$D_A\left(L_x, L_y\right) = \frac{(L_x n_{A1} + L_y n_{A2} + (z_{A4} - z_{A1}) n_{A3})}{\sqrt{n_{A1}^2 + n_{A2}^2 + n_{A3}^2}} \qquad (3)$$

dans laquelle $z_{A1} = Z_A(0,0)$, $z_{A4} = Z_A(L_x,L_y)$ ;

$n_{A1} = L_y(z_{A1} - z_{A3})$, $n_{A2} = L_x(z_{A1} - z_{A5})$, $n_{A3} = L_x L_y$, (4) ;

dans laquelle $z_{A3} = Z_A(L_x,0)$, $z_{A5} = Z_A(0,L_y)$ ;

et une équation pour convertir la hauteur relative $D_A(x,y)$ de l'un quelconque des points dans la région de mesure sur la lame de microscope à mesurer en hauteur $Z_A(x, y)$ :

$$D_A(x, y)\sqrt{n_{A1}^2 + n_{A2}^2 + n_{A3}^2} = n_{A1}x + n_{A2}y + n_{A3}(Z_A(x,y) - z_{A1}) \quad (5) \quad ;$$

l'obtention d'un jeu d'équations concernant des nombres inconnus a, b, $z_{A1}$, $z_{A3}$, $z_{A4}$ et $z_{A5}$ selon les équations précédentes (1), (2), (3), (4) et (5) :

$$\left\{ \begin{array}{l} D_A(x_i, y_i) = \frac{(x n_{B1} + (Z_B(x_i,0) - z_{B1}) n_{B3})}{\sqrt{n_{B1}^2 + n_{B2}^2 + n_{B3}^2}} + f_x(x_i, a, L_x) + \frac{(y n_{B2} + (Z_B(0,y_i) - z_{B1}) n_{B3})}{\sqrt{n_{B1}^2 + n_{B2}^2 + n_{B3}^2}} \\[2ex] \qquad + f_y(y_i, b, L_y) + \frac{x_i y_i}{L_x L_y} \frac{(L_x n_{A1} + L_y n_{A2} + (z_{A4} - z_{A1}) n_{A3})}{\sqrt{n_{A1}^2 + n_{A2}^2 + n_{A3}^2}} \\[2ex] \qquad D_A(x_i, y_i)\sqrt{n_{A1}^2 + n_{A2}^2 + n_{A3}^2} = n_{A1}x + n_{A2}y + n_{A3}(z_i - z_{A1}) \\[1ex] \qquad n_{B1} = L_y(z_{B1} - z_{B3}), n_{B2} = L_x(z_{B1} - z_{B5}), n_{B3} = L_x L_y \\[1ex] \qquad n_{A1} = L_y(z_{A1} - z_{A3}), n_{A2} = L_x(z_{A1} - z_{A5}), n_{A3} = L_x L_y \end{array} \right.$$

$$(6) \quad ;$$

la mesure des coordonnées et des hauteurs de l'un quelconque d'au mois six points de mesure standard dans la région de mesure de la lame de microscope à mesurer pour obtenir une entrée $(x_i, y_i, z_i)$, la substitution de l'entrée dans le jeu d'équations (6) pour obtenir une équation fonctionnelle des coordonnées et des hauteurs, et ensuite l'entrée des coordonnées (x,y) de l'un quelconque des points de mesure standard sur la lame de microscope à mesurer afin d'obtenir la hauteur correspondante $Z_A(x,y)$.

2. Procédé selon la revendication 1, dans lequel a est un paramètre de la fonction de différence de hauteur pour les points sur la délimitation selon la direction de l'axe X de la lame de microscope à mesurer ; et b est un paramètre de la fonction de différence de hauteur pour les points sur la délimitation selon la direction de l'axe Y de la lame de microscope à mesurer.

3. Procédé de scannage comprenant le procédé de mesure et de calcul des hauteurs sur la surface incurvée de la lame de microscope selon la revendication 1 ou 2, dans lequel le procédé de scannage est capable d'obtenir une image d'un échantillon placé sur l'une quelconque des régions de surface de la lame de microscope à mesurer et capable de réaliser un scannage automatique pour obtenir des images de tous les échantillons placés sur la lame de microscope à mesurer.

4. Microscope configuré pour mettre en œuvre le procédé selon la revendication 2 ou 3.

5. Microscope selon la revendication 4 et configuré pour mettre en œuvre le procédé de scannage selon la revendication 3, dans lequel le microscope comprend un mécanisme de mouvement capable de se déplacer vers le haut et vers le bas pour réguler la distance entre la lentille de microscope et la lame de microscope ; la hauteur de chacun des points de mesure standard à l'intérieur d'une optique de scannage du microscope est obtenable en utilisant ledit procédé pour mesurer et calculer les hauteurs sur la surface incurvée de la lame de microscope ; le mécanisme de mouvement est configuré pour réguler automatiquement la distance entre la lentille et la lame de microscope conformément aux hauteurs obtenues pour assurer une imagerie claire ; et l'image formée est scannée ou photographiée en formant des données d'image pour leur stockage.

6. Microscope selon la revendication 4, configuré pour scanner et imager automatiquement des échantillons sur une lame de microscope et les stocker sous forme de données conformément au procédé selon la revendication 1, ledit microscope comprenant en outre un module de calcul configuré pour déduire, en fonction de la hauteur, après avoir obtenu les hauteurs des points de mesure standard dans chacune des régions de surface sur la lame de microscope à mesurer, la distance entre la lentille et la lame de microscope à mesurer quand les échantillons dans la région de surface correspondant à chacun des points de mesure standard sur la lame de microscope à mesurer sont imagées clairement, et pour obtenir un point de position de la lentille dans l'optique d'un système de mesure par microscope ; et le mécanisme de mouvement étant configuré pour entraîner la lentille afin de la déplacer jusqu'au point de position ; et
après avoir déplacé la lentille jusqu'au point de position, le microscope étant configuré pour photographier ou scanner et imager automatiquement les échantillons, et pour convertir ladite photographie ou image en données pour leur stockage.

Providing a standard microscope slide and placing on an object stage of an automatic scanning microscope, starting the automatic scanning microscope to measure a scanning region on the standard microscope slide to obtain coordinates of all standard measuring points within the scanning region and all heights on two boundary lines along an X-axis direction and a Y-axis direction, and recording in the automatic scanning microscope.

Providing a microscope slide to be measured and placing on the object stage of the same automatic scanning microscope, starting the automatic scanning microscope to measure heights of four corner points in measuring region, and substituting the coordinates and the heights into a functional equation of the coordinates and the heights to obtain the height corresponding to each of the coordinates on the microscope slide to be measured.

Based on acquisition of the height on each microscope slide to be measured, imaging samples in one surface region on the microscope slide to be measured, wherein at the same magnification, a DOF of the microscope is fixed, the microscope can automatically move from one standard measuring point to a point corresponding to the height of another standard measuring point according to the measured height, so that the formed image is clear at each of the standard measuring points.

After imaging the samples in the surface region corresponding to one standard measuring point, driving, by a movement mechanism, a lens to move to a position of the height corresponding to a next standard measuring point for imaging again, thereby sequentially scanning and imaging all the standard measuring points and storing data.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104730702
- CN 102298206
- US 2006279746 A1